# EUROPEAN PATENT SPECIFICATION

(11) **EP 0 540 730 B1**
(45) Date of publication and mention of the grant of the patent: **29.12.1997**
(21) Application number: 92913300.7
(22) Date of filing: 20.05.1992
(51) Int. Cl.: C08F 8/50

(54) **SOLUBLE PERFLUOROELASTOMERS AND USE IN PELLICLES**
LÖSLICHE PERFLUOROELASTOMERE UND VERWENDUNG IN PHOTOGRAPHISCHEN FILMEN
ELASTOMERES PERFLUORES SOLUBLES ET LEUR UTILISATION DANS LA FORMATION DE PELLICULES

(30) Priority: 20.05.1991 US 703220; 23.12.1991 US 812718
(43) Date of publication of application: 12.05.1993
(73) Proprietor: E.I. DU PONT DE NEMOURS AND COMPANY, Wilmington Delaware 19898 (US)
(72) Inventor: LEGARE, John, Michael, Newark, DE 19711 (US); LOGOTHETIS, Anestis, L., Wilmington, DE 19810 (US); OJAKAAR, Leo, Hockessin, DE 19707 (US); YANG, Duck, Joo, Wilmington, DE 19807 (US)
(74) Representative: von Kreisler, Alek, Dipl.-Chem.
(86) International application number: PCT/US92/04328
(87) International publication number: WO 92/20720

(56) References cited:
- EP-A- 0 416 528
- DE-A- 1 570 464
- US-A- 4 281 092
- US-A- 4 743 658
- CHEMICAL ABSTRACTS, vol. 112, no. 18, Columbus, Ohio, US; abstract no. 169128Q,

## Description

### FIELD OF THE INVENTION

The invention relates to a perfluoropolymer and its use in pellicle production. More specifically, the invention relates to a soluble perfluoroelasomer and its use in an antireflective layer of a pellicle.

### BACKGROUND OF THE INVENTION

Perfluoroelastomers have long been used in a variety of applications that require excellent resistance to high temperature and chemical attack. One particularly outstanding class of fluoropolymers that has been used in elastomeric applications is that prepared from tetrafluoroethylene (TFE) and perfluoro (alkyl vinyl) ether, and particularly perfluoro (methyl vinyl) ether (PMVE). To facilitate the crosslinking in these copolymers that is essential to good elastomeric properties, a small percentage of termonomer is generally incorporated.

While these perfluoroelastomers have been used successfully in the past, a continuing need exists for high performance materials which can be coated onto a substrate from a solution, and which exhibit an exceptionally high degree of purity. Also, a continuing need exists for antireflective coatings which exhibit the best possible combination of optical properties and adhesion to core materials. The need for such antireflective coatings is particularly acute in the projection printing manufacture of integrated circuits.

Projection printing systems for forming an image on a light sensitive substrate or wafer are used to expose photoresist-coated semiconductor wafers in the manufacture of integrated circuits. These systems normally include a photomask or reticle (hereinafter "mask") having a transparent substrate with a pattern of opaque and transparent areas formed on one surface thereof, an illumination system for directing a beam of radiant energy such as light or ultraviolet rays through the mask to the wafer, optical means for forming a focused image of the mask pattern on the wafer and a pellicle for maintaining the images of any dust particles out of focus on the surface of the mask.

The pellicle is a free-standing thin optical film supported on a frame. Normally, the frame is attached to the mask and the optical film stands away from the mask surface by a given distance. Dust particles which might otherwise settle on the mask and be projected onto the wafer, will settle on the pellicle instead and be defocused. Consequently, when pellicles are used in a conventional projection printing system, one or more dust particles will not affect the yield of a given wafer and yields can be significantly improved.

Ideally, pellicles should be invisible to the radiant energy of the projection printing system. That is, in order to produce clear, well-defined patterns, the optical film of the pellicle should transmit all of the radiant energy used during the projection printing process, with no reflection.

In the past, single layer pellicles, typically made of nitrocellulose, have been used. With increasing miniaturization, the pattern elements have become smaller and the optical transmission of the pellicle films has become increasingly insufficient. In order to increase the optical transmission of pellicle films, that is, reduce their optical reflectiveness or glare, and thus produce clear, well-defined patterns, multilayer pellicles with various antireflective coatings have previously been proposed. Such coatings have included fluoropolymers, such as perfluoroelastomer, which provided good optical characteristics. However, materials with better optical and adhesion properties are still needed.

### SUMMARY OF THE INVENTION

The invention is directed to a perfluoroelastomer which is soluble in a number of solvents and which is characterized by exceptional purity.

Specifically, the present invention provides a process for the preparation of perfluoroelastomers by randomly copolymerizing tetrafluoroethylene, at least one perfluoro (alkyl vinyl) ether and at least one cure site monomer, and pyrolyzing the resulting copolymer at a temperature of from 320 to 350 °C for a period of from 10 to 14 hours, wherein the pyrolyzed perfluoroelastomer has a molecular weight characterized by an Inherent Viscosity of from 0.3 to 0.5 measured according to ASTM test D2857 at 30 °C using a polymer concentration of 0.2 g/dl in a mixture of perfluorobutylfuran (FC-75), 2,2,3-trichloroperfluorobutane (HC-437) and 2-methoxyethyl ether (diglyme) in a weight ratio of 40/60/3, and
has at least 0.25 weight % cure site, calculated as the cure site monomer.

The present invention further provides a perfluoroelastomer obtainable by the above mentioned process.

Furthermore, the present invention provides a pellicle comprising a thin optical film which is tautly adhered to one edge of a closed support frame, said film comprising a core layer having an index of refrection of from 1.342 to 1.80 and a thickness of from 0.3 to 20 µm, characterized in that the film further comprises at least one antireflective layer comprising a perfluoroelastomer obtainable by the above mentioned process.

### BRIEF DESCRIPTION OF THE DRAWINGS

Figure 1 is a chematic cross-sectional view of a pellicle of the present invention, positioned on a mask.

Figures 2, 2A nd 2B are cross-sectional views of films which can be used in the pellicles of the present invention.

### DETAILED DESCRIPTION OF THE INVENTION

The compositions of the present invention are prepared by the random copolymerization of TFE, perflouro (alkyl vinyl) ether and at least one cure site monomer. Known methods for random copolymerization can be used. For example, the reactants, general proportions and reaction conditions used for the initial polymerization can be as described in Harris et al., U.S. Patent 3,132,123, Fritz et al., U.S. Patent 3,291,843, Apotheker et al., U.S. Patent 4,035,565, Breazeale, U.S. Patent 4,281,092 and Tatemoto et al., U.S. Patent 4,243,770.

The resulting polymer is pyrolyzed at a temperature of about from 320 to 350°C for a period of about from 10 to 14 hours. A temperature of at least about 330°C is preferred, and temperatures of about from 340 to 350°C have been found to be particularly satisfactory for many polymers. Substantial degrees of pyrolysis are generally not realized below the minimum temperatures and times indicated above, and significant polymer degradation occurs above the indicated maximum temperatures and times.

For ease of handling of the polymer after pyrolysis, the heating is preferably carried out in or on a glass vessel. The atmosphere for the pyrolysis is not critical, and the pyrolysis can, for example, be carried out in air or in an inert atmosphere such as nitrogen.

The pyrolysis reduces the molecular weight of the polymer. The molecular weight is linearly related to the Inherent Viscosity, which can be measured according to ASTM test D2857 at 30°C, using a polymer concentration of 0.2 g/dl in a mixture of perfluorobutylfuran (FC-75), 2,2,3-trichloroperfluorobutane (HC-437) and 2-methoxyethyl ether (diglyme) in a weight ratio of 40/60/3. In accordance with the present invention, the pyrolyzed polymer exhibits an Inherent Viscosity of about from 0.3 to 0.5.

The pyrolyzed polymer has a low level of color-forming impurities. The concentration of such impurities should be less than about 200 ppm, and preferably less than about 100 ppm. The polymer, before the pyrolytic treatment of the present invention, generally has levels of impurities of greater than about 1000 ppm, and often greater than 2000 ppm. Typical color-forming impurities are those that emit at least one of hydrogen fluoride, carbon dioxide, and carbon monoxide on decomposition. These impurities can result from additives introduced in the polymerization and processing of the polymer, either by intentional addition such as initiators or polymerization aids, or inadvertently as a result of the polymerization or isolation processes.

The measurement of such impurities can be by standard methods, such as thermo-gravimetric analysis/infrared (TGA/IR) techniques. Another technique for measurement of extractable fluoride is that described in Imbalzano and Kerbow, U.S. Patent 4,743,658.

The pyrolyzed polymer should have sufficient cure site monomer remaining to permit satisfactory crosslinking. While this will vary considerably with the type of polymer and type of cure site monomer, in general, tract amounts of the cure site monomer, preferably at least about 0.25% by weight, and more preferably at least about 0.5% by weight, should remain after sintering. The maximum amount of cure site remaining is not critical. However, little benefit is obtained when greater than about 2.5% by weight is present in the sintered polymer with no more than 1.0% being preferred.

The percentage of cure site in the final polymer is calculated by the general techniques well known in the art. For example, in the event that a cyano-cure site monomer is used, the procedure described in Breazeale, U.S. Patent 4,281,092 can be used. In these calculations, the cure site in the final polymer is calculated as the entire monomeric unit, bearing the cure site, that is incorporated into the copolymer.

The pyrolyzed polymer can be compounded with conventional additives to aid in processing and curing, in order to get useful physical properties. After compounding, the elastomer can be shaped into its desired configuration and cured by application of heat and pressure, by molding a specimen in a press. A second curing stage, or postcure, is often carried out in nitrogen at higher temperature than the initial, or press, cure and at atmospheric pressure.

The products of the present invention can be in the form of powders, pellets and gums, cast or molded articles such as films, sheets or slabs, and finished parts such as o-rings. The solubility of these polymers also permits their formulation as solutions and the conversion of such solutions into cast films and coatings.

The products of the present invention are soluble in a variety of organic solvents, including fluorinated solvents, and accordingly can be coated onto substrates to modify the optical or performance characteristics of the substrates. Typically, solutions can be prepared containing up to about 25% by weight of the polymers of the present invention.

The products of the present invention can also be used for coatings, adhesives and in elastomeric applications in which exceptional purity is required along with resistance to chemical attack and elevated temperatures.

In pellicle films, the characteristics of the present polymer products are particularly advantageous. Pellicles of the present invention include a film having a core layer and at least one such polymer layer on at least one surface of the core.

The core layer of the pellicle film has an index of refraction of 1.32 to 1.80 and a thickness of 0.3 to 20 microns. Preferably, the core layer has an index of refraction of 1.51 and a thickness of 0.8 to 3.0 microns. Materials known in the art for making uncoated pellicles may be used as the core layer of the invention. These materials are capable of forming a free-standing, isolatable film of substantially uniform thickness having a low level of particulates and low absorption of incident light. A film of this type is considered uniform if the thickness varies by less than 2 wavelengths of exposure frequency per inch. A "low level of particulates" means the film contains less than 20 visible particles and no particles greater than 20 microns. "Low absorption" means that less than 1% incident light is absorbed by the film.

Preferably, the core layer comprises a polymer selected from the group consisting of polycarbonates, polyacrylates, polyvinylbutyrates, polyethersulfones and cellulose derivatives such as cellulose acetate, cellulose acetate butyrate or nitrocellulose. Nitrocellulose films have been found to be particularly satisfactory, and are accordingly preferred.

On at least one surface of the core layer is at least one antireflective layer comprising a perfluoroelastomer prepared from tetrafluoroethylene (TFE) and perfluoro (alkyl vinyl) ether and at least one cure site monomer, the perfluoroelastomer having a molecular weight characterized by an Inherent Viscosity of about from 0.3 to 0.5, and containing less than about 200 ppm of color-forming impurities. In a preferred antireflective layer, the pyrolyzed polymer is prepared from 40-60% TFE, 35-55% perfluoro (alkyl vinyl) ether and 0-5% cure site monomer, by weight of the perfluoropolymer. Preferred cure site monomers include vinylidene fluoride, perfluoro-(8-cyano-5-methyl-3,6-dioxa-1-octene) (8-CNVE), bromotetrafluorobutene and perfluoro (2-phenoxypropyl vinyl ether).

A particularly preferred antireflective layer of the invention comprises a perfluoroelastomer having randomly copolymerized units of TFE, PMVE and an 8-CNVE cure site present in an amount from trace quantities to 1.0 percent by weight of the perfluoropolymer. This low molecular weight perfluoropolymer can be prepared by pyrolysis for 10 hrs at 345°C and is further characterized by having an Inherent Viscosity of 0.40.

The perfluoroelastomers can be coated onto one or both sides of the core layer to form the pellicle film. The perfluoroelastomers can be applied from a solvent which is incompatible with the underlying layers and which evaporates after application to produce a uniform antireflective layer. An incompatible solvent is one which does not dissolve or degrade any underlying layer. Such solvents include fluorocarbons such as those commercially available from 3M Company, St. Paul, MN as Fluorinert® FC-40 Electronic Liquid which comprises perfluoro trialkyl amines, Fluorinert® FC-75 Electronic Liquid which comprises perfluoro(2-butyltetrahydrofuran) and Fluorinert® FC-77 Electronic Liquid which comprises a fully fluorinated organic compound with a typical molecular weight range of 300-1000.

The coated pellicle films of the invention can be produced by methods known in the art, e.g., Japanese patent publication Kokai Patent No. 60-237450.

In a preferred method, the core layer is produced by dissolving a core layer-forming material in a solvent and spin coating the solution onto a glass substrate. A solution suitable for spin coating should wet the substrate, form a uniform coating on the substrate and dry uniformly. After the solution is coated onto the spinning substrate, spinning is stopped and the coating is heated to evaporate solvent and form a uniform core layer. This uniform core layer is isolated from the substrate onto a lifting frame. The lifting frame is mounted onto a spin coater and the antireflective coating is formed on the core layer by spin coating a suitable solution of the pyrolyzed fluoropolymer. A suitable spin coating solution of the fluoropolymer is formed by dissolving the fluoropolymer in a solvent which is incompatible with (i.e., will not dissolve or otherwise degrade) the core layer. The resultant fluoropolymer solution is typically filtered through a 0.2 micron absolute filter and preferably through a 0.1 micron absolute filter prior to being spin coated onto the core layer. If an anti-reflective layer is desired on both sides of the core layer, the lifting frame is raised off the spin coater, rotated 180° to expose the opposite side of the core layer, and remounted on the spin coater. The opposite side of the core layer is then coated with the fluoropolymer solution in the manner described above.

The optimal thickness of the antireflective layer will vary depending on the refractive index of the antireflective layer material and the wavelength of energy that will be used. For example, a single transparent layer will reduce surface reflection if the refractive index of the layer is less than that of the substrate to which it is applied and the layer is of appropriate thickness. If the index of refraction of the layer material is exactly equal to the square root of that of the substrate, all surface reflection of light will be eliminated for that wavelength at which the product of refractive index times thickness is equal to one-quarter of the wavelength. At other wavelengths, the destructive interference between light reflected from top and bottom surfaces of the antireflective layer is not complete; but, nonetheless, there is a reduction in overall reflectiveness.

The coated core layer and the lifting frame to which it is attached are removed from the spin coater and heated to evaporate solvent. The resulting film is then appropriately adhered to a closed support frame by a suitable adhesive and extends tautly across the support frame, which is smaller than the lifting frame. The side of the support frame opposite the adhered film is secured to a mask surface, the pellicle film suspended above the pattern on the surface of the mask. If only one side of the core layer has an antireflective layer thereon, the side lacking the antireflective layer is preferably adhered to the support frame. If both sides of the pellicle film have an antireflective layer, either side may be adhered to the support frame.

Conventional glues and adhesives may be used to adhere the film to the frame provided the glue or adhesive does not contain a solvent for the core layer. Alternatively, the film may be adhered to the frame by heat press lamination. Preferably, a liquid, UV curable (i.e., curable upon exposure to ultra-violet light) adhesive, such as that commercially available from Norland Products, Inc. as Norland Optical Adhesives 68 and 81.

The closed support frame of the invention may be in any shape and size suitable for attachment to a photo mask or reticle such that the pellicle film does not touch and the frame does not interfere with the work surface of the mask or reticle. Typically, the support frame is circular with a diameter of 1-6 inches^{*}, or square with sides of 1-6 inches. The material of the support frame should have high strength, a low tendency to attract dust, and a light weight. Hard plastics, and metals such as aluminum, and aluminum alloys can all be used for the support frame. Aluminum alloys, particularly machined, anodized aluminum, have been found to be particularly satisfactory, and are accordingly preferred.
^{*}1 inch = 2.54 cm

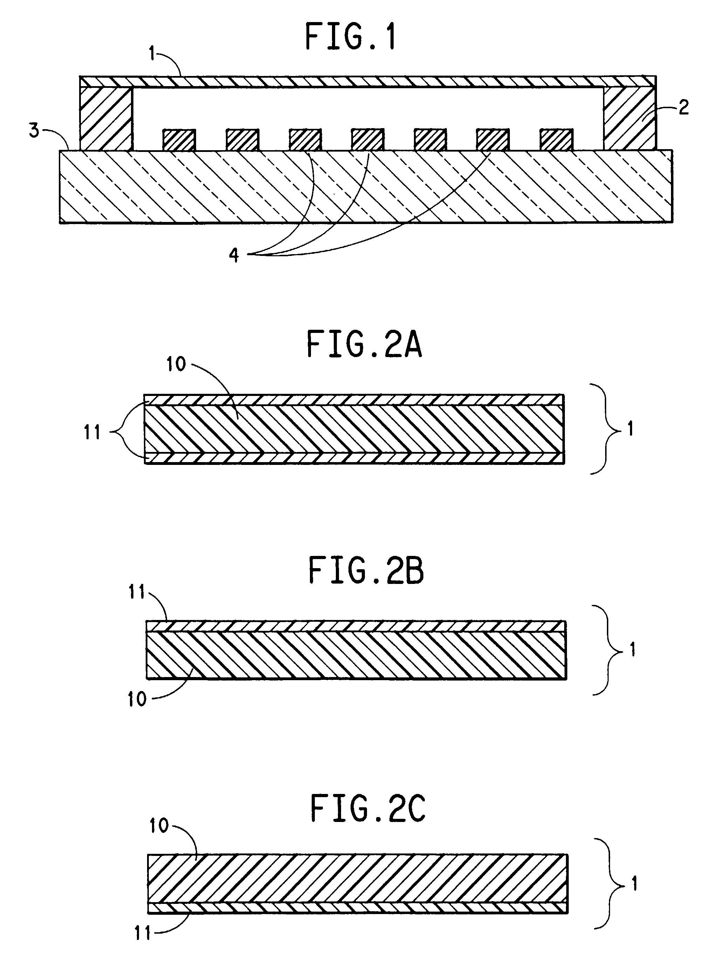

The present invention will be more fully understood by reference to the drawings, in which Figure 1 illustrates a pellicized mask. The mask 3 is transparent and, typically, composed of silica. A pattern 4 is coated on the upper surface of mask 3. This pattern is encompassed by support frame 2 and covered by pellicle film 1. The pellicle film 1 is shown in greater detail in Figure 2, and comprises a core layer 10 having an antireflective layer 11 on both sides thereof. Other embodiments of the invention are shown in Figures 2A and 2B. In Figure 2A, the antireflective layer 11 is only on the top side of the core, while in Figure 2B an antireflective layer 11 is on only the bottom side of the core. Radiant energy is projected from a source above the pellicle film through the film, pattern and mask onto a photoresist coated wafer in order to produce integrated circuits.

The perfluoropolymers used to coat the core pellicle film in the present invention exhibit properties which are especially desirable for pellicle antireflective layers. Such properties include low absorption and dispersion of light in a broad range of wavelengths, low water absorption to reduce sagging, greater durability to permit repeated exposure, low refractive indices, low surface energies to reduce particulate adhesion and good chemical resistance to solvents and cleaning agents. In addition, these perfluoropolymers exhibit outstanding adhesion to the core films typically used for pellicle construction, and are similarly compatible with adhesives used for pellicle assembly.

Although the foregoing discussion and the following examples are directed primarily to thin optical films having only a core layer and a perfluoropolymer antireflective layer on one or both sides thereof, the invention is not so limited. The ordinary artisan will recognize that additional layers such as antistatic layers and cooperating antireflective layers, may also be part of the thin optical film of this invention. Conventional methods such as spin-coating may be used to produce these films having additional layers.

The present invention is further illustrated by the following specific examples, in which parts and percentages are by weight unless otherwise indicated. In these Examples, evolved HF was measured by the following procedure.

The sample material is cut into small pieces (about 1 cm square if the sample is a film) and a weighed amount of about 1 g is placed into a sample holder of a cylindrical quartz testing furnace. The sample is then placed into the furnace at 200°C and sealed and purged with nitrogen gas at 280 ml/min. Gases evolved from the sample are carried with the nitrogen gas into two impingers connected in series. Each of the impingers contains 20 ml of 0.1 N aqueous sodium hydroxide solution and 2 ml of Total Ionic Strength Adjusting Buffer of the type normally used in fluoride specific ion measurements (a chloride/acetate ammonium salt commercially available from Orion as 94-09-11). Hydrogen fluoride evolving from the sample is trapped in the impingers as sodium fluoride. After purging with nitrogen for 30 minutes, the solutions are transferred from the impingers into polyethylene bottles. The fluoride concentration in each solution is determined directly from the sample solution using an appropriately calibrated specific fluoride ion electrode. The procedure is repeated for another polymer sample at a 300°C furnace temperature. The fluoride concentration reported in µm/ml is the sum of the concentrations measured for the two impingers per sample and furnace temperature setting. This is used to calculate the amount of fluoride expressed as ppm.

### EXAMPLES

### Example 1

A copolymer was prepared by the random copolymerization of 55.5% TFE, 42.6% PMVE and 1.9% perfluoro-(8-cyano-5-methyl-3,6-dioxa-1-ocetene)(8-CNVE), under the general reaction conditions described in Breazeale, U.S. Patent 4,281,092. The initial copolymer had an Inherent Viscosity of 0.57 at 30°C.

The copolymer was pyrolyzed at 345°C for 10 hours in air. The Inherent Viscosity of the resulting pyrolyzed polymer was 0.40 at 30°C. The pyrolyzed polymer was tested for color-forming impurities by TGA/IR as well as evolved HF techniques, as described above, and found to have 88 ppm of color-forming impurities. The polymer had sufficient cure sites to permit satisfactory crosslinking to a cured elastomer. And, the pyrolyzed polymer was water-clear and soluble in Fluorinert FC-40 Electronic Liquid.

### Example 2

A copolymer was prepared by the random copolymerization of 52.4% TFE, 44% PMVE and 1.8% perfluoro-(2-phenoxy-propyl vinyl) ether (P₂PPVE), under the general reaction conditions described in Pattison, U.S. Patent 3,467,638. The initial copolymer had an Inherent Viscosity of 0.65 at 30°C. The copolymer was pyrolyzed at 320°C for 10 hours in an air oven. The pyrolyzed polymer was tested as before, and found to have an Inherent Viscosity of 0.45 at 30°C. The polymer had sufficient cure sites to permit satisfactory crosslinking to a cured elastomer.

### Example 3

A copolymer was prepared by the random copolymerization of 55% TFE, 43.2% PMVE, and 1.8% 4-bromo-3,3,4,4-tetrafluorobutene (BTFB), under the general reaction conditions described in Apotheker, U.S. Patent 4,035,565. The initial copolymer had an Inherent Viscosity of 0.54 at 30°C. The copolymer was pyrolyzed at 320°C for 10 hours in an air oven. The pyrolyzed polymer was tested as before, and found to have an Inherent Viscosity of 0.38 at 30°C. The polymer had sufficient cure sites to permit satisfactory crosslinking to a cured elastomer.

### Example 4

A core film was prepared from a nitrocellulose solution which was spin coated onto a glass substrate, lifted and then baked to evaporate solvent. The resulting uniform, 2.85 micron thick, nitrocellulose film transmitted about 82% to about 99% of incident light at wavelengths of 300 to 800 nanometers. At wavelengths of 350 to 450 nanometers, the amount of incident light transmitted by this film varied from about 85% to 99%.

The pyrolyzed polymer from Example 1 was dissolved in Fluorinert® FC-40 Electronic Liquid to provide a 1.5 weight % solution. The solution was filtered through a 0.2 micron absolute filter and spin-coated onto the nitrocellulose film. After the first side of the nitrocellulose layer was coated with the solution, a lifting frame was attached to the polymer coated nitrocellulose film. The film was lifted from the substrate and the opposite side of the nitrocellulose layer was coated by rotating the lifting frame 180° and repeating the spin coating process. The nitrocellulose layer coated on both sides with the sintered polymer solution was heated to remove solvent. The resulting film transmitted greater than 97% incident light at wavelengths of 350 to 450 nanometers. When adhered to an aluminum support frame with standard optical adhesive, the seal between the film and the frame withstood normal 30 psi^{*} air streams used for testing, impinging the seal at a distance of 1/4 inch for thirty seconds.
^{*}1 psi = 0.0689 bar

## Claims

1. A process for the preparation of perfluoroelastomers by randomly copolymerizing tetrafluoroethylene, at least one perfluoro (alkyl vinyl) ether and at least one cure site monomer, and pyrolyzing the resulting copolymer at a temperature of from 320 to 350 °C for a period of from 10 to 14 hours, wherein the pyrolyzed perfluoroelastomer
has a molecular weight characterized by an Inherent Viscosity of from 0.3 to 0.5 measured according to ASTM test D2857 at 30 °C using a polymer concentration of 0.2 g/dl in a mixture of perfluorobutylfuran (FC-75), 2,2,3-trichloroperfluorobutane (HC-437) and 2-methoxyethyl ether (diglyme) in a weight ratio of 40/60/3, and
has at least 0.25 weight % cure site, calculated as the cure site monomer.

2. The process of claim 1 wherein the copolymer is pyrolyzed at a temperature of at least 330 °C.

3. The process of claim 2 wherein the copolymer is pyrolyzed at a temperature of at least 340 °C.

4. The process of claim 1 wherein at least 0.5 weight % cure site, calculated as the cure site monomer, is present in the copolymer after pyrolyzing.

5. The process of claim 1 wherein the cure site monomer consists essentially of perfluoro-(8-cyano-5-methyl-3,6-dioxa-1-octene).

6. A perfluoroelastomer obtainable by the process according to any of claims 1-5.

7. A pellicle comprising a thin optical film which is tautly adhered to one edge of a closed support frame, said film comprising a core layer having an index of refrection of from 1.342 to 1.80 and a thickness of from 0.3 to 20 µm, characterized in that the film further comprises at least one antireflective layer comprising a perfluoroelastomer obtainable by the process according to any of claims 1-5.

8. The pellicle of claim 7 wherein the cure site monomer is selected from vinylidene fluoride, perfluoro-(8-cyano-5-methyl-3,6-dioxa-1-octene), bromotetrafluorobutene or perfluoro (2-phenoxypropyl vinyl ether).

9. The pellicle of claim 8 wherein the core layer comprises a polymer selected from polycarbonates, polyacrylates, polyvinylbutyrates, polyethersulfones, polysulfones and cellulose derivatives.

10. The pellicle of claim 9 wherein the core layer consists essentially of nitrocellulose.

11. The pellicle of claim 10 wherein the film transmits greater than 97 % of incident light in the band of 350 nanometers to 450 nanometers.

12. The pellicle of claim 7 wherein the film comprises a core layer and an antireflective layer on both sides of the core layer.

13. The pellicle of claim 8 wherein the low molecular weight perfluoropolymer comprises randomly copolymerized units of tetrafluoroethylene, perfluoro (methyl vinyl) ether and a perfluoro-(8-cyano-5-methyl-3,6-dioxa-1-octene) cure site.

14. The pellicle of claim 13 wherein the Inherent Viscosity of the perfluoropolymer is 0.40.

## Patentansprüche

1. Verfahren zur Herstellung von Perfluor-Elastomeren durch statistische Copolymerisation von Tetrafluorethylen, wenigstens eines Perfluor(alkylvinyl)ethers und wenigstens eines Monomers mit Härtungsstellen, und Pyrolyse des sich ergebenden Copolymers bei einer Temperatur von 320 bis 350 °C während einer Zeitspanne von 10 bis 14 Stunden, worin das pyrolysierte Perfluor-Elastomer eine Molmasse, gekennzeichnet durch eine logarithmische Viskositätszahl von 0,3 bis 0,5 hat, gemessen gemäß dem ASTM-Test D2857 bei 30 °C unter Verwendung einer Polymer-Konzentration von 0,2 g/dl in einer Mischung von Perfluorbutylfuran (FC-75), 2,2,3-Trichlorperfluorbutan (HC-437) und 2-Methoxyethylether (Diglyme), in einem Gewichtsverhältnis von 40:60:3, und wenigstens 0,25 Gew.-% Härtungsstellen, bezogen auf das Monomer mit Härtungsstellen, hat.

2. Verfahren gemäß Anspruch 1, worin das Copolymer bei einer Temperatur von wenigstens 330 °C pyrolysiert wird.

3. Verfahren gemäß Anspruch 2, worin das Copolymer bei einer Temperatur von wenigstens 340 °C pyrolysiert wird.

4. Verfahren gemäß Anspruch 1, worin wenigstens 0,5 Gew.-% Härtungsstellen, bezogen auf das Monomer mit Härtungsstellen, in dem Copolymer nach der Pyrolyse vorliegen.

5. Verfahren gemäß Anspruch 1, worin das Monomer mit Härtungsstellen im wesentlichen Perfluor-(8-cyano-5-methyl-3,6-dioxa-1-octen) darstellt.

6. Perfluor-Elastomer, das durch das Verfahren gemäß irgendeinem der Ansprüche 1 bis 5 erhältlich ist.

7. Überzug, umfassend einen dünnen optischen Film, der auf straffgespannte Weise an einer Kante eines geschlossenen Trägerrahmens haftet, wobei der Film eine Kernschicht umfaßt, die einen Brechungsindex von 1,342 bis 1,80 und eine Dicke von 0,3 bis 20 µm hat, dadurch gekennzeichnet, daß der Film weiterhin wenigstens eine Antireflektionsschicht umfaßt, die ein Perfluor-Elastomer umfaßt, das durch das Verfahren gemäß irgendeinem der Ansprüche 1 bis 5 erhältlich ist.

8. Überzug gemäß Anspruch 7, worin das Monomer mit Härtungsstellen aus Vinylidenfluorid, Perfluor-(8-cyano-5-methyl-3,6-dioxa-1-octen),Bromtetrafluorbuten oder Perfluor(2-phenoxypropylvinylether) ausgewählt ist.

9. Überzug gemäß Anspruch 8, worin die Kernschicht ein Polymer umfaßt, das aus Polycarbonaten, Polyacrylaten, Polyvinylbutyraten, Polyethersulfonen, Polysulfonen und Cellulose-Derivaten ausgewählt ist.

10. Überzug gemäß Anspruch 9, worin die Kernschicht im wesentlichen aus Nitrocellulose besteht.

11. Überzug gemäß Anspruch 10, worin der Film mehr als 97 % des einfallenden Lichts in dem Band von 350 nm bis 450 nm durchläßt.

12. Überzug gemäß Anspruch 7, worin der Film eine Kernschicht und eine Antireflektionsschicht auf beiden Seiten der Kernschicht umfaßt.

13. Überzug gemäß Anspruch 8, worin das Perfluorpolymer niedriger Molmasse statistisch copolymerisierte Struktureinheiten von Tetrafluorethylen, Perfluor(methylvinyl)ether und eines Perfluor-(8-cyano-5-methyl-3,6-dioxa-1-octen) mit Härtungsstellen umfaßt.

14. Überzug gemäß Anspruch 13, worin die logarithmische Viskositätszahl des Perfluorpolymers 0,40 ist.

## Revendications

1. Un procédé pour la préparation d'élastomères perfluorés par copolymérisation statistique de tétrafluoréthylène, d'au moins un perfluoro(éther d'alkyle et de vinyle) et d'au moins un monomère à site de réticulation, et pyrolyse du copolymère résultant à une température de 320 à 350°C pendant une période de 10 à 14 heures, dans lequel l'élastomère perfluoré pyrolysé a un poids moléculaire caractérisé par une Viscosité Inhérente de 0,3 à 0,5, mesurée selon l'essai ASTM D2857 à 30°C en utilisant une concentration de polymère de 0,2 g/dl dans un mélange de perfluorobutylfuranne (FC-75), 2,2,3-trichloroperfluorobutane (HC-437) et d'éther de 2-méthoxyéthyle (diglyme) en un rapport en poids de 40/60/3, et contient au moins 0,25 % en poids de site de réticulation, calculé en monomère à site de réticulation.

2. Le procédé de la revendication 1, dans lequel le copolymère est pyrolysé à une température d'au moins 330°C.

3. Le procédé de la revendication 2, dans lequel le copolymère est pyrolysé à une température d'au moins 340°C.

4. Le procédé de la revendication 1, dans lequel au moins 0,5 % en poids de site de réticulation, calculé en monomère à site de réticulation, est présent dans le copolymère après la pyrolyse.

5. Le procédé de la revendication 1, dans lequel le monomère à site de réticulation consiste essentiellement en perfluoro(8-cyano-5-méthyl-3,6-dioxa-1-octène).

6. Un élastomère perfluoré pouvant être obtenu par le procédé selon l'une quelconque des revendications 1 à 5.

7. Une membrane comprenant une pellicule optique mince qui adhère de façon tendue à un bord d'un cadre fermé de support, ladite pellicule comprenant une couche centrale ayant un indice de réfraction de 1,342 à 1,80 et une épaisseur de 0,3 à 20 µm, caractérisée en ce que la pellicule comprend de plus au moins une couche antiréfléchissante comprenant un élastomère perfluoré pouvant être obtenu par le procédé selon l'une quelconque des revendications 1 à 5.

8. La membrane de la revendication 7, dans laquelle le monomère à site de réticulation est choisi parmi le fluorure de vinylidène, le perfluoro(8-cyano-5-méthyl-3,6-dioxa-1-octène), le bromotétrafluorobutène ou le perfluoro(éther de 2-phénoxypropyle et de vinyle).

9. La membrane de la revendication 8, dans laquelle la couche centrale comprend un polymère choisi parmi les polycarbonates, les polyacrylates, les polyvinylbutyrates, les polyéthersulfones, les polysulfones et les dérivés de cellulose.

10. La membrane de la revendication 9, dans laquelle la couche centrale consiste essentiellement en nitrocellulose.

11. La membrane de la revendication 10, dans laquelle la pellicule transmet plus de 97 % de lumière incidente dans la bande de 350 nanomètres à 450 nanomètres.

12. La membrane de la revendication 7, dans laquelle la pellicule comprend une couche centrale et une couche antiréfléchissante sur les deux faces de la couche centrale.

13. La membrane de la revendication 8, dans laquelle le polymère perfluoré de bas poids moléculaire comprend des motifs copolymérisés au hasard de tétrafluoréthylène, de perfluoro(éther de méthyle et de vinyle) et de perfluoro-(8-cyano-5-méthyl-3,6-dioxa-1-octène) formant site de réticulation.

14. La membrane de la revendication 13, dans laquelle la Viscosité Inhérente du polymère perfluoré est de 0,40.
